# EUROPÄISCHE PATENTSCHRIFT

(11) **EP 1 587 662 B1**
(45) Veröffentlichungstag und Bekanntmachung des Hinweises auf die Patenterteilung: **28.08.2013**
(21) Anmeldenummer: 03767822.4
(22) Anmeldetag: 19.12.2003
(51) Int. Cl.: B29C 47/34, B29C 47/00, B65H 23/32

(54) **ABZUGSVORRICHTUNG**
TAKE-OFF UNIT
DISPOSITIF D'EXTRACTION

(30) Priorität: 15.01.2003 DE 10301321
(43) Veröffentlichungstag der Anmeldung: 26.10.2005
(73) Patentinhaber: Windmöller & Hölscher KG, 49525 Lengerich (DE)
(72) Erfinder: HERSCHBACH, Christof, 48157 Münster (DE); FRISCHE, Holger, 49205 Hasbergen (DE); KASSELMANN, Gerd, 49170 Hagen (DE)
(86) Internationale Anmeldenummer: PCT/EP2003/014560
(87) Internationale Veröffentlichungsnummer: WO 2004/062882

(56) Entgegenhaltungen:
- EP-A- 0 658 506
- DE-A- 4 440 647
- US-A- 3 744 693
- US-A- 5 979 731
- PATENT ABSTRACTS OF JAPAN vol. 1995, no. 05, 30. Juni 1995 (1995-06-30) & JP 07 053102 A (TOYO INK MFG CO LTD), 28. Februar 1995 (1995-02-28)
- PATENT ABSTRACTS OF JAPAN vol. 010, no. 227 (M-505), 7. August 1986 (1986-08-07) & JP 61 061828 A (SEKISUI CHEM CO LTD), 29. März 1986 (1986-03-29)

## Beschreibung

Die Erfindung betrifft eine Abzugsvorrichtung für im Blasverfahren hergestellte Folie.

Eine Abzugsvorrichtung für im Blasverfahren hergestellte Folie ist beispielsweise aus der DE 195 22 318 A1 bekannt. Nach dem Flachlegen der aus dem Blaskopf eines Extruders austretenden Folie, beispielsweise einer Kunststoff-Schlauchfolie, wird diese über Luftwendestangen und Umlenkwalzen geführt, die in der Regel gegeneinander reversieren, wobei sie in der Regel Drehbewegungen um eine gemeinsame Achse ausführen. Nach dem Durchlaufen des Abzugs wird die Folie einer Wickelvorrichtung zugeführt, auf der sie zum einfacheren Abtransport zu einem Wickel gewickelt wird.

Die in derartigen Abzügen verwendeten Luftwendestangen weisen über ihren Mantel verteilt mehrere Bohrungen auf, aus denen Pressluft strömt. Die Pressluft sorgt für ein Luftpolster zwischen der Oberfläche der Luftwendestange und der über diese abgezogenen Folie, so dass die Folie nahezu berührungsfrei geführt werden kann. Insbesondere haftende bis klebende Folien müssen mit großen Luftpolstern über die Wendestangen geführt werden.

Ein Problem bei den bekannten Luftwendestangen ist die über die axiale Breite der Luftwendestange ungleichmäßige Dicke der Luftpolster bzw. die ungleichmäßige Kraft, die aufgrund des Luftdrucks auf die Folie wirkt. An den Randbereichen der Folie kann Luft entweichen, so dass dort dieser Luftdruck geringer ist. Die Randbereiche der Folie umwickeln die Wendestange enger als der Mittelbereich der Folie. Die Folie weist folglich im Mittelbereich einen gewissen Durchhang auf und kann nicht mehr flach geführt werden. In diesem Bereich neigt die Folie zu Faltenbildungen.

Die DE 9418255 U1 schlägt daher eine Luftwendestange vor, die konvex ausgeformt ist und so die Bahnspannung über die gesamte Breite der Folie vergleichmäßigt. Die dort vorgestellte Luftwendestange verjüngt sich in Richtung ihrer axialen Randbereiche. Es hat sich jedoch herausgestellt, dass sich die so geführten Folien nicht zu einem idealen Wickel aufwickeln lassen.

Daher schlägt die DE 44 40 647 A1 eine Luftwendestange mit einer konkaven Form vor, die der variierenden Dicke des Luftpolsters Rechnung trägt, aber die es ermöglicht, die Folie eben zu führen. Im Mittelbereich der Wendestange wird die Folie mit einem größeren Abstand zur Wendestange geführt als in den Endbereichen der Wendestange. Durch den seitlich geringeren Abstand weisen die über die Breite der Folie verteilten Kräfte, die durch die Pressluft auf die Folie wirken, geringere Variationen auf.

Auch bei dieser Ausführungsform der Luftwendestange hat sich in der Praxis gezeigt, dass das Luftpolster zwischen der Wendestange und der Folie keine ausreichend gleichmäßige Kraft auf die Folie ausübt, so dass die Folie nicht mit einer über ihre Breite gleichmäßigen Bahnspannung geführt werden kann. Insbesondere ist eine solche Luftwendestange nur auf eine Folienbreite abstimmbar. In heutiger Zeit werden aber mit einem Blaskopf verschiedene Folienbreiten hergestellt.

Die Druckschrift EP 0 658 506 A1 offenbart Luftwendestangen, bei denen auch gesintertes Material eingesetzt werden kann. Der Herstellungsaufwand für eine solche Luftwendestange dürfte allerdings recht hoch sein.

Die Aufgabe der vorliegenden Erfindung Ist es daher, Luftwendestange zu schaffen, mit der sich die Stabilität des Luftpolsters verbessern lässt und bei der der Herstellungsaufwand gering ist.

Erfindungsgemäß wird diese Aufgabe durch die Merkmale des Anspruchs 1 gelöst.

Eine solche Luftwendestange vermag die Folie glatt und eben zu führen. Der Erfindung liegt die Erkenntnis zu Grunde, dass Luftschichten, die direkt an raues Material grenzen, eine große Reibung erfahren und dadurch abgebremst werden. Dieser Effekt findet seinen Ursprung also in der rauen Beschaffenheit von gesintertem Material. Die Rauheit wird durch feine Strukturen hervorgerufen, die unregelmäßig auf der Oberfläche des Werkstoffs verteilt sind. Insbesondere an den Randbereichen der Folie wird durch eine derart modifizierte Wendestange das verstärkte Entweichen der Luft deutlich reduziert. Bei flachen Luftpolstern wird das Entweichen der Luft sogar vollständig verhindert. Es hat sich gezeigt, dass aufgrund des reduzierten Luftaustritts die zum Aufbau des Luftpolsters benötigte Pumpleistung reduziert werden kann, was sich auch positiv auf die aufzuwendende Energie auswirkt.

Erfindungsgemäß ist vorgesehen, dass nur die Oberflächenbereiche der Luftwendestange, die die Randbereiche der Folie führen, aus gesintertem Material bestehen. Im Mittelbereich der Folie kann die Luftwendestange mit Kupfer, einer Kupferlegierung oder Messing beschichtet sein oder aus einem dieser Materialien bestehen. Die genannten Materialien bieten, wie es in der DE 41 39 837 näher erläutert ist, den Vorteil, dass im Gegensatz zur Verwendung von Stahl die Verschmutzung der Folien reduziert wird.

Vorteilhaft ist es dabei, wenn das gesinterte Material eine Sinterkeramik ist.

Zusätzlich zum Einsatz von Luftwendestangen mit gesintertem Material ist es vorteilhaft, die günstigen Eigenschaften einer beispielsweise konkav ausgeformten Luftwendestangen auszunutzen. Daher weist eine bevorzugte Ausführungsform der erfindungsgemäßen Luftwendestange einen über ihre axiale Ausdehnung unterschiedlichen Radius auf.

Im Folgenden wird eine vorteilhafte Ausgestaltung der Luftwendestange erläutert.

Dementsprechend besteht sie aus einem Metallrohr, das in Teilbereichen mit Messing beschichtet ist. In den Teilbereichen, auf denen die Ränder der Folie geführt werden, weist die Luftwendestange eine Oberfläche aus gesintertem Material auf. Die Oberfläche des so beschichteten Rohrs weist nach einem bestimmten Muster verteilte Bohrungen auf. Durch das Innere des Rohrs, das einseitig verschlossen ist, wird Pressluft gedrückt, die durch die erwähnten Bohrungen austritt. Hierdurch bildet sich zwischen der über die Wendestange geführten Folie und der Oberfläche der Wendestange ein Luftpolster, welches die Reibung zwischen Folie und Wendestange zumindest in dem Bereich der Bohrungen vermindert. In mit Messing beschichteten Bereichen ist die noch verbleibende Reibung im Bereich der Berührungspunkte gering, da sich zusätzlich zur geringen Reibung zwischen Folie und Messingbeschichtung die Luft über dieser Beschichtung gut und damit gleichmäßig verteilen kann. Die im Bereich der Folienränder aufgebrachte Beschichtung aus Sintermaterial kann zwar eine etwas erhöhte Reibung zwischen Folie und Wendestange bewirken, jedoch überwiegt der Vorteil, dass auch die Luft in diesen Bereich eine größere Reibung erfährt und daher diesen Bereich nur schlecht überströmt. Aufgrund dieser kombinatorischen Maßnahme wird die Funktionsfähigkeit der Wendestange erheblich verbessert.

## Patentansprüche

1. Abzugsvorrichtung für im Blasverfahren hergestellte Folie mit mindestens einer Luftwendestange, deren Oberfläche zumindest teilweise aus gesintertem Material besteht **dadurch gekennzeichnet, dass**
nur die Oberflächenbereiche der Luftwendestange, die die Randbereiche der Folie führen, aus gesintertem Material bestehen.

2. Abzugsvorrichtung nach Anspruch 1
**dadurch gekennzeichnet, dass**
im Mittelbereich der Folie die Luftwendestange mit Kupfer, einer Kupferlegierung oder Messing beschichtet ist oder aus einem dieser Materialien besteht.

3. Abzugsvorrichtung nach einem der vorstehenden Ansprüche
**dadurch gekennzeichnet, dass**
das gesinterte Material eine Sinterkeramik ist.

4. Abzugsvorrichtung nach einem der vorstehenden Ansprüche
**dadurch gekennzeichnet dass**
Luftwendestange über ihre axiale Ausdehnung einen unterschiedlichen Radius aufweist.

5. Verwendung einer Luftwendestange, deren Oberfläche zumindest teilweise aus gesintertem Material besteht, nach einem der Ansprüche 1 bis 4 in einer Abzugsvorrichtung für im Blasverfahren hergestellte Folie.

## Claims

1. withdrawal device for a film produced in a blowmoulding process, having at least one air turning bar, the surface of which consists at least partially of sintered material,
**characterized in that**
only those surface regions of the air turning bar which guide the edge regions of the film consist of sintered material.

2. Withdrawal device according to Claim 1,
**characterized in that**,
in the middle region of the film, the air turning bar is coated with copper, a copper alloy or brass or consists of one of these materials.

3. Withdrawal device according to either of the preceding claims,
**characterized in that**
the sintered material is a sintered ceramic.

4. Withdrawal device according to one of the preceding claims,
**characterized in that**
the air turning bar has a variable radius over the axial extent thereof.

5. use of an air turning bar, the surface of which consists at least partially of sintered material, according to one of Claims 1 to 4 in a withdrawal device for a film produced in a blow-moulding process.

## Revendications

1. Dispositif d'extraction pour des films fabriqués dans un procédé de soufflage avec au moins une barre de retournement à air, dont la surface se compose au moins en partie d'un matériau fritté,
**caractérisé en ce que**
seulement les régions de surface de la barre de retournement à air qui guident les régions de bord du film se composent de matériau fritté.

2. Dispositif d'extraction selon la revendication 1,
**caractérisé en ce que**
dans la région centrale du film, la barre de retournement à air est revêtue de cuivre, d'un alliage de cuivre ou de laiton, ou se compose d'un de ces matériaux.

3. Dispositif d'extraction selon l'une quelconque des revendications précédentes,
**caractérisé en ce que**
le matériau fritté est une céramique frittée.

4. Dispositif d'extraction selon l'une quelconque des revendications précédentes,
**caractérisé en ce que**
la barre de retournement à air présente un rayon différent sur son étendue axiale.

5. Utilisation d'une barre de retournement à air dont la surface se compose au moins en partie de matériau fritté, selon l'une quelconque des revendications 1 à 4, dans un dispositif d'extraction pour des films fabriqués dans un procédé de soufflage.
